# EUROPEAN PATENT SPECIFICATION

(11) **EP 3 911 970 B1**
(45) Date of publication and mention of the grant of the patent: **12.03.2025**
(21) Application number: 20705575.7
(22) Date of filing: 17.01.2020
(51) Int. Cl.: G01S 7/481, G01S 7/497

(54) **ACTIVELY ALIGNED SOLID-STATE LIDAR SYSTEM**
AKTIV AUSGERICHTETES FESTKÖRPERLIDARSYSTEM
SYSTÈME LIDAR À SEMI-CONDUCTEURS ALIGNE ACTIVEMENT

(30) Priority: 18.01.2019 US 201916251343
(43) Date of publication of application: 24.11.2021
(73) Proprietor: Continental Autonomous Mobility US, LLC, Auburn Hills, Michigan 48326 (US)
(72) Inventor: LEPPIN, Heiko, 88131 Lindau (DE); SMITH, Elliot, Carpinteria, California 93101 (US); VULETICI, Goran, Carpinteria, California 93101 (US); FARKAS, Felix Attila, 30704 Cluj-Napoca (RO)
(74) Representative: Continental Corporation
(86) International application number: PCT/US2020/014052
(87) International publication number: WO 2020/150586

(56) References cited:
- EP-A1- 3 153 877
- WO-A1-2005/083462
- US-A1- 2010 328 644
- US-A1- 2018 146 186
- US-A1- 2018 227 566

## Description

### BACKGROUND

A solid-state Lidar system includes a photodetector, or an array of photodetectors that is essentially fixed in place relative to a carrier, e.g., a vehicle. Light is emitted into the field of view of the photodetector and the photodetector detects light that is reflected by an object in the field of view. For example, a Flash Lidar system emits pulses of light, e.g., laser light, into essentially the entire the field of view. The detection of reflected light is used to generate a 3D environmental map of the surrounding environment. The time of flight of the reflected photon detected by the photodetector is used to determine the distance of the object that reflected the light.

The solid-state Lidar system may be mounted on a vehicle to detect objects in the environment surrounding the vehicle and to detect distances of those objects for environmental mapping. The output of the solid-state Lidar system may be used, for example, to autonomously or semi-autonomously control operation of the vehicle, e.g., propulsion, braking, steering, etc. Specifically, the system may be a component of or in communication with an advanced driver-assistance system (ADAS) of the vehicle.

Since the solid-state Lidar system is fixed in place relative to the vehicle, ride-height and/or angle of the vehicle can change the aim of the field of view. The ride-height and/or angle of the vehicle may change, e.g., from changes in weight and/or center of gravity. This may be caused by, for example, varying weight, location, and/or age of occupants, varying weight and/or location of cargo, changes in an active-suspension system of the vehicle, changes in an active-ride-handling system of the vehicle, etc. Difficulties can arise in properly aiming the vertically-narrow field of view during such changes in the vehicle and over the lifetime of the vehicle.

Document US 2018/146186 A1 discloses an active illumination 3D imaging system with a range camera operable to determine distances to features in a scene. The system comprises an illumination system and an imaging system simultaneously controllable to provide a field of illumination and a field of view that coincide and are substantially coextensive with a region of interest in a portion of the scene an track the region of interest as its moves. Both the field of illumination and the field of view are moved at the same time to track region of interest.

### BRIEF DESCRIPTION OF THE DRAWINGS

Figure 1 is a perspective view of a vehicle with a Lidar system showing a 3D map of the objects detected by the Lidar system.
Figure 2 is a perspective view of the Lidar system including a casing and a housing that houses a photodetector and pivots relative to the casing.
Figure 3 is a cross-sectional view through the casing along line 3 in Figure 2.
Figure 4 is a schematic of one example of the Lidar system through the casing along line 5 of Figure 2.
Figure 5 is a schematic of another example of the Lidar system through the casing along line 5 of Figure 2.
Figure 6 is a perspective view of another example of the Lidar system.
Figure 7 is a schematic of the front of the example of Figure 6.
Figure 8 is a block diagram of the examples in Figures 2-5.
Figure 9 is a block diagram of the example in Figures 6-7.
Figure 10 is a method of operating the system of the examples in Figures 2-5.
Figure 11 is a method of operating the system of the example in Figures 6-7.

### DETAILED DESCRIPTION

With reference to the Figures, wherein like numerals indicate like parts throughout the several views, a system 10 is generally shown. Specifically, the system 10 is a light detection and ranging (Lidar) system 10. The system 10 includes a light emitter 12 that emits light into a field of illumination FOI and a photodetector 14 that has a field of view FOV that overlaps the field of illumination FOI. For the purpose of this disclosure "photodetector" includes a single photodetector or an array of photodetectors (including 1D arrays, 2D arrays, etc). The system 10 detects the emitted light that is reflected by an object in the fields of view, e.g., pedestrians, street signs, vehicles, etc.

The system 10 independently adjusts the vertical and/or horizontal aim of the field of illumination FOI and the vertical aim of the field of view FOV to align the field of illumination FOI and the field of view FOV. This alignment may be performed repeatedly and in the field, i.e., during use of the system 10, such that the system 10 can recalibrate the relative positions of the field of illumination FOI and field of view FOV in the field, e.g., before, during, and/or after operation. For example, the system 10 may be mounted on a vehicle 16 and the alignment of the field of illumination FOI and the field of view FOV may be performed at any suitable time, e.g., before, during, and/or after operation of the vehicle 16. As examples, changes in the ride-height and/or angle of the vehicle 16 may be caused by changes in weight, center of gravity of the vehicle 16. This may be cause by, for example, varying weight, location, and/or age of occupants, varying weight and/or location of cargo, changes in an active-suspension system of the vehicle 16, changes in an active-ride-handling system of the vehicle 16, etc. In such an event, the field of view FOV may be adjusted to a desired vertical position, and the field of illumination FOI may be independently adjusted to align the field of illumination FOI with the field of view FOV. Specifically, due to the requirement of a high-resolution Lidar system, the height of the vertical aim of the field of view FOV may be limited, and the system 10 allows for adjustment of the vertical aim of the system 10. This improves the system requirements on the field of view FOV. The system 10 adjusts the field of illumination FOI to align with the field of view FOV.

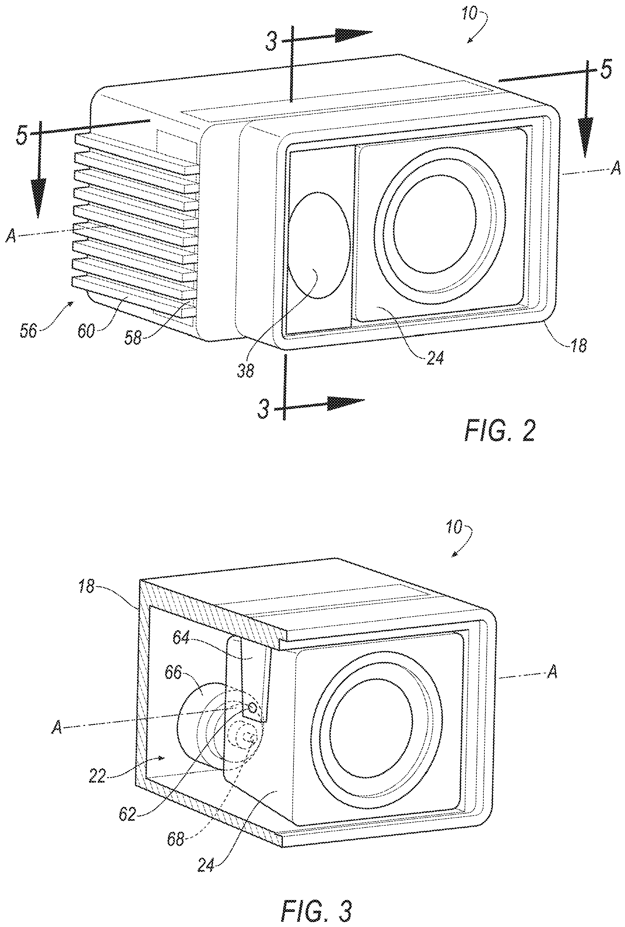

In the examples shown in Figures 2-7, the system 10 includes a casing 18. The light emitter 12 is stationary relative to the casing 18. A beam-steering device 20 is configured to adjustably reflect light from the light emitter 12 into the field of illumination FOI. The photodetector 14 is pivotally supported by the casing 18. An actuator 22 is between the casing 18 and the photodetector 14 and is configured to pivot the photodetector 14 relative to the casing 18, i.e., to vertically adjust the photodetector 14. For example, the system 10 may include a housing 24 that supports the photodetector 14 and is movable relative to the casing 18, and the actuator 22 moves the housing 24 relative to the casing 18.

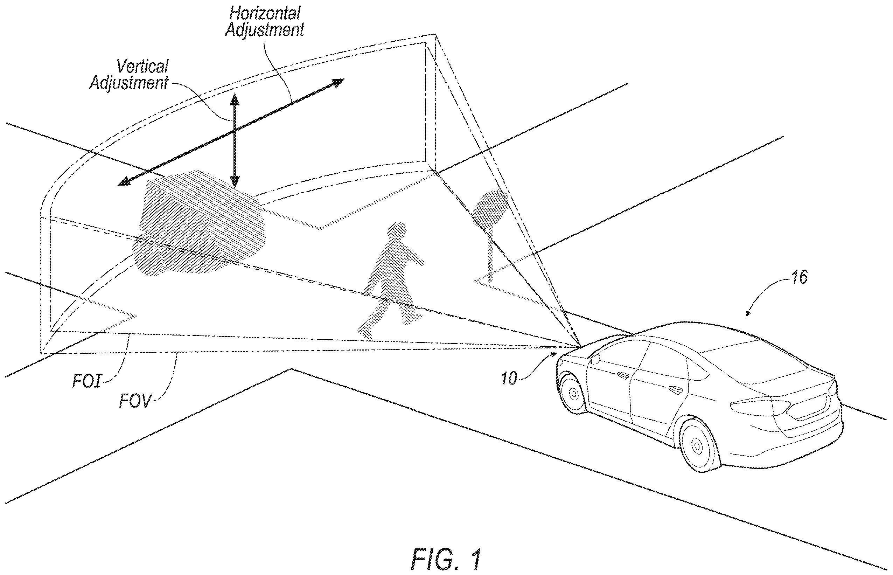

The system 10 is shown in Figure 1 as being mounted on a vehicle 16. In such an example, the system 10 is operated to detect objects in the environment surrounding the vehicle 16 and to detect distance of those objects for environmental mapping. The output of the system 10 may be used, for example, to autonomously or semi-autonomously control operation of the vehicle 16, e.g., propulsion, braking, steering, etc. Specifically, the system 10 may be a component of or in communication with an advanced driver-assistance system 10 (ADAS) of the vehicle 16. The system 10 may be mounted on the vehicle 16 in any suitable position (as one example, the system 10 is shown on the front of the vehicle 16 and directed forward). The vehicle 16 may have more than one system 10 and/or the vehicle 16 may include other object detection systems, including other Lidar systems. The vehicle 16 is shown in Figure 1 as including a single system 10 aimed in a forward direction merely as an example. The vehicle 16 shown in the Figures is a passenger automobile. As other examples, the vehicle 16 may be of any suitable manned or un-manned type including a plane, satellite, drone, watercraft, etc.

The system 10 may be a solid-state Lidar system. In such an example, the system 10 is stationary relative to the vehicle 16. For example, the casing 18 that is fixed relative to the vehicle 16, i.e., does not move relative to the component of the vehicle to which the casing 18 is attached, and a silicon substrate of the system 10 is supported by the casing 18.

As a solid-state Lidar system, the system 10 may be a Flash Lidar system. In such an example, the system 10 emits pulses of light into the field of illumination FOI. More specifically, the system 10 may be a 3D Flash Lidar system that generates a 3D environmental map of the surrounding environment, as shown in part in Figure 1. An example of a compilation of the data into a 3D environmental map is shown in the field of view FOV and the field of illumination FOI in Figure 1.

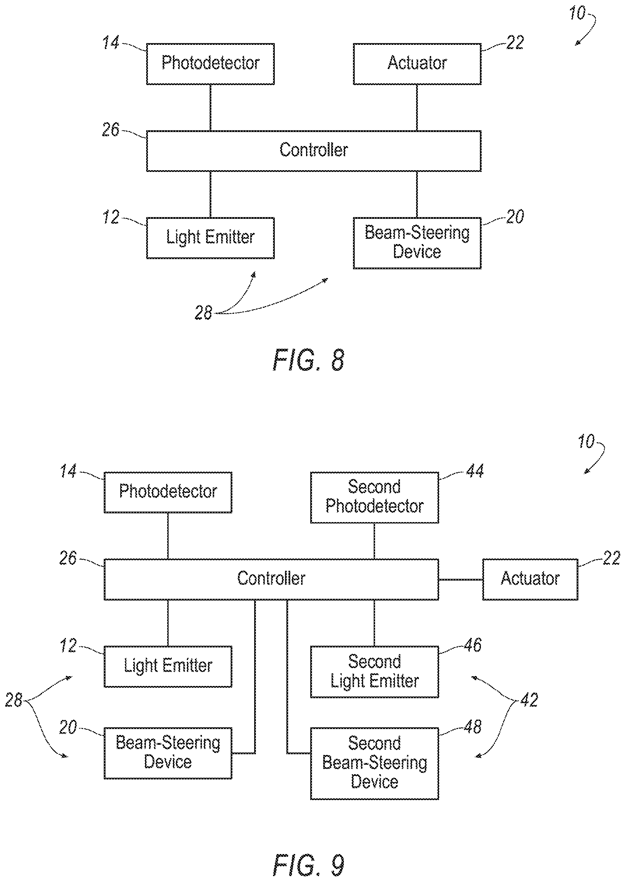

With reference to Figures 8 and 9, the system 10 includes a controller 26, i.e., a computer, in communication with the light emitter 12 and the photodetector 14. The light emitter 12 is a component of a light source 28 of the system 10, and the photodetector 14 is a component of a receiving unit 30 of the system 10. The system 10 may include any suitable number of light sources and receiving units, i.e., one or more in the casing 18.

The controller 26 may be a microprocessor-based controller or field programmable gate array (FPGA) implemented via circuits, chips, and/or other electronic components. In other words, the controller 26 is a physical, i.e., structural, component of the system 10. For example, the controller 26 may include a processor, memory, etc. The memory of the controller 26 may store instructions executable by the processor, i.e., processor-executable instructions, and/or may store data. The controller 26 may be in communication with a communication network of the vehicle 16 to send and/or receive instructions from the vehicle 16, e.g., components of the ADAS.

As described further below, the controller 26 (as shown in Figures 8 and 9) communicates with the light source 28 and the photodetector 14. Specifically, the controller 26 instructs the light source 28 to emit light and substantially simultaneously initiates a clock. When the light is reflected, i.e., by an object in the first field of view FOV, the photodetector 14 detects the reflected light and communicates this detection to the controller 26, which the controller 26 uses to identify object location and distance to the object (based time of flight of the detected photon using the clock initiated at the emission of light from the light source 28). The controller 26 uses these outputs from the photodetector 14 to create the environmental map and/or communicates the outputs from the photodetector 14 to the vehicle 16, e.g., components of the ADAS, to create the environmental map. Specifically, the controller 26 continuously repeats the light emission and detection of reflected light for building and updating the environmental map.

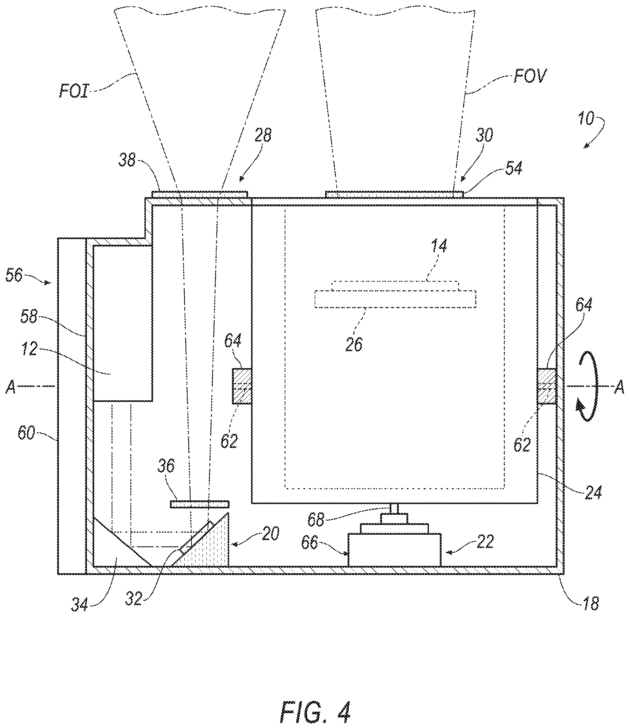

The light source 28 emits light into the field of illumination FOI for detection by the photodetector 14 when the light is reflected by an object in the field of view FOV, as shown in Figure 1. With reference to Figures 4, 5, and 7, the light source 28 may include the light emitter 12. For example, the light emitter 12 may be a laser. The light emitter 12 may be, for example, a semiconductor laser. In one example, the light emitter 12 is a vertical-cavity surface-emitting laser (VCSEL). As another example, the light emitter 12 may be a diode-pumped solid-state laser (DPSSL). As another example, the light emitter 12 may be an edge emitting laser diode. The light source 28 may be designed to emit a pulsed flash of light, e.g., a pulsed laser light. Specifically, the light emitter 12, e.g., the VCSEL or DPSSL or edge emitter, is designed to emit a pulsed laser light. The light emitted by the light emitter 12 may be, for example, infrared light. Alternatively, the light emitted by the light emitter 12 may be of any suitable wavelength.

With continued reference to Figures 4, 5, and 7, the light source 28 may include the beam-steering device 20. A "beam-steering device" is a structural component of a Lidar system. The beam-steering device 20 is controlled by the controller 26, i.e., the controller 26 instructs the beam-steering device 20 to move to adjust the field of illumination FOI. Light is reflected by the beam-steering device 20 into the field of illumination FOI. As set forth above, the beam-steering device 20 adjustably reflects the light emitted from the light emitter 12. In other words, a position of the beam-steering device 20 is adjusted to adjust the position of the field of illumination FOI. The adjustment of the beam-steering device 20 may include a vertical component and/or a horizontal component.

As one example, the beam-steering device 20 includes an active mirror 32, i.e., a movable mirror, that is adjustable to aim light from the light emitter 12 into the field of illumination FOI. In other words, the light emitter 12 (and potentially other components of the light source 28) is positioned to emit light at the active mirror 32 directly from the light emitter 12 or indirectly from the light emitter 12 through intermediate components.

Specifically, the active mirror 32 may be a micromirror. For example, the beam-steering device 20 may be a micro-electro-mechanical systems (MEMS) mirror. As an example, the beam-steering device 20 may be a digital micromirror device (DMD). The MEMS mirror may include one mirror or may include an array of mirrors that are capable of being tilted to deflect light. As another example, the MEMS mirror may include one or more mirrors each on a gimbal that is tilted, e.g., by application of voltage.

In addition to or in the alternative to the MEMS mirror, the beam-steering device 20 may include a diffuser. As another example, the beam-steering device 20 may be a liquid-crystal solid-state device, which can steer the light beam through a change in index of refraction due to an applied voltage.

The field of illumination FOI is the area exposed to light that is emitted from the light source 28. In one example, as shown in Figure 1, the field of illumination FOI may be smaller than the field of view FOV. Alternatively, the field of illumination FOI may be larger than the field of view FOV or the field of illumination FOI and the field of view FOV may substantially match ("substantially match" is based on manufacturing capabilities and tolerances of the light source 28 and the photodetector 14). As set forth above, the field of illumination FOI overlaps the field of view FOV, and vice-versa. In other words, as least part of the field of view FOV and at least part of the Field of illumination FOI occupy the same space such that an object in the overlap will reflect light from the field of illumination FOI back to the photodetector 14.

As set forth above, the system 10 aligns the field of view FOV and the field of illumination FOI. In other words, the system 10 positions the field of view FOV and the field of illumination FOI to a desired relative position, vertically and optionally horizontally. As one example, the field of view FOV and the field of illumination FOI are "aligned" when positioned such that the maximum intensity of reflected light in the field of view FOV is detected by the photodetector 14. The field of view FOV and the field of illumination FOI may be centered to the positions that provide the maximum detected intensity. As another example, the field of illumination FOI and the field of view FOV may be centered in order to optimize the horizon at the desired level of the scene.

With continued reference to Figures 4, 5, and 7, in addition to the beam-steering device 20, the light source 28 may include any suitable number of stationary mirrors and/or diffusers in the casing 18 that direct light. In the example shown in Figure 1, the light beams are emitted from the system 10 to flash the entire field of illumination FOI. As another example, the light beams are emitted from the system 10 as horizontal lines and, in such an example, the beam-steering device 20, the stationary mirrors, and/or the diffusers may emit the light as the horizontal beam.

Three examples of the light source 28 are shown in Figures 4, 5, and 7, respectively, and common numerals are used to identify common features in the Figures. The three examples show various arrangements of the light source 28. These three examples are provided as examples, and the system 10 may have any suitable light source 28.

With reference to Figure 4, the light emitter 12 is positioned in a bottom front corner of the casing 18 and is aimed at a stationary mirror 34. The stationary mirror 34 is stationary relative to the casing 18, i.e., is passive. The stationary mirror 34 reflects the light from the light emitter 12 to the beam-steering device 20. The beam-steering device 20 reflects the light through two diffusers 36, 38 and into the field of illumination FOI. The diffusers 36, 38 are stationary relative to the casing 18.

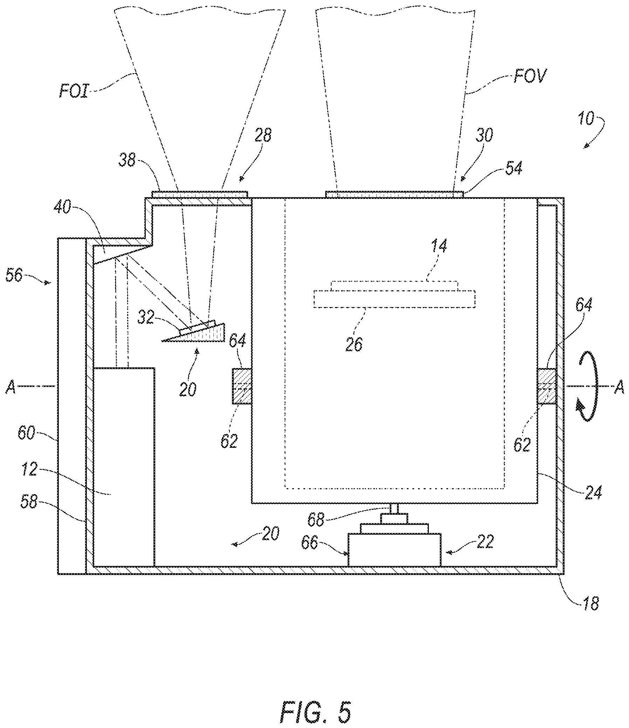

In the example shown in Figure 5, the light emitter 12 is positioned in a bottom rear corner of the casing 18 and is aimed at a stationary mirror 40. The stationary mirror 40 is stationary relative to the casing 18, i.e., is passive. The stationary mirror 40 reflects light from the light emitter 12 to the beam-steering device 20. The beam-steering device 20 reflects the light through a diffuser 38 and into the field of illumination FOI. Specifically, the beam-steering device 20 steers the light vertically and horizontally based on the position of the beam-steering device 20. The diffuser 38 is stationary relative to the casing 18.

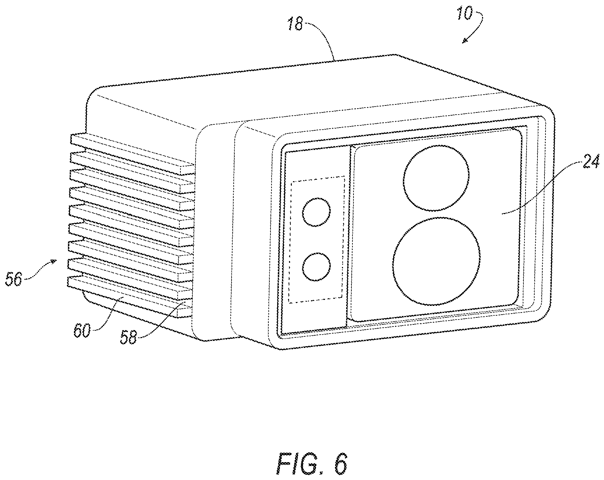

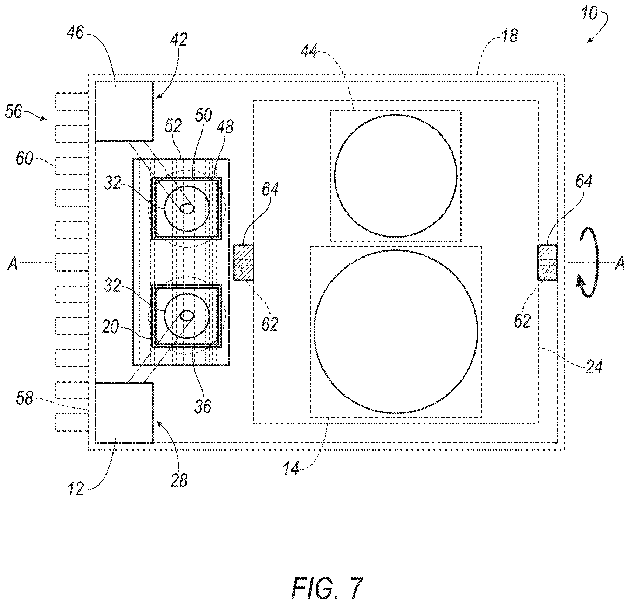

In the example shown in Figures 6 and 7, the system 10 includes a second light source 42 and a second photodetector 44. Specifically, the system 10 in Figures 6 and 7 includes a second light emitter 46 and a second beam-steering device 48. The second photodetector 44 supported by the housing 24, i.e., is movable with the housing 24 relative to the casing 18 as a unit. In the example shown in Figures 6 and 7, the light emitter 12, photodetector 14, and beam-steering device 20 may be in mirror-image positions of the second light emitter 46, the second photodetector 44, and the second beam-steering device 48, respectively, about the horizontal axis A.

The second light emitter 46 is stationary relative to the casing 18 and the second beam-steering device 48 is configured to direct light from the second light emitter 46 into a second field of illumination. The second photodetector 44 is pivotally supported by the housing 24 and has a second field of view overlapping the second field of illumination. In other words, the second photodetector 44 detects light that was emitted by the second light emitter 46 and reflected by an object in the second field of view. The field of view FOV and field of illumination FOI may be different than the second field of view and second field of illumination, respectively. As an example, the field of view FOV/field of illumination FOI may be shorter and/or wider than the second field of view/field of illumination FOI, e.g., for short-range and long-range detection.

With continued reference to Figures 6 and 7, since both the photodetector 14 and the second photodetector 44 are supported by the housing 24, movement of the housing 24 relative to the casing 18 simultaneously moves both the field of view FOV of the photodetector 14 and the field of view FOV of the second photodetector 44, i.e., the second field of view. The beam-steering device 20 and the second beam-steering device 48 may be independently operable such that the beam-steering device 20 aligns the field of illumination FOI with the field of view FOV and such that the second beam-steering device 48 aligns the second field of illumination with the second field of view. Specifically, the beam-steering device 20 and the second beam-steering device 48 independently steer the respective light beams vertically and horizontally based on the position of the beam-steering device 20

With reference to Figure 7, the light emitter 12 is positioned at a bottom corner of the casing 18 and the second light emitter 46 is positioned at a top corner of the casing 18. The light source 28 in Figure 7 may have the same arrangement as shown in the top views of Figure 4 or 5, and the second light source 42 may have a mirror-image arrangement. For example, light from the light emitter 12 may be reflected from the beam-steering device 20 to a diffuser 36 and light from the second light emitter 46 may be reflected from the second beam-steering device 48 to a second diffuser 50. Light from the diffuser 36 and the second diffuser 50 goes through a common diffuser 52 to the field of illumination FOI and second field of illumination, respectively.

The receiving unit 30 includes the photodetector 14 and may include receiving optics 54. The photodetector 14 may be, for example, an avalanche photodiode detector or PIN detector. As one example, the photodetector 14 may be a single-photon avalanche diode (SPAD). The field of view FOV is the area in which reflected light may be sensed by the photodetector 14. Light reflected in the field of view FOV is reflected to receiving optics 54. The receiving optics 54 may include any suitable number of lenses, filters, etc.

With reference to Figures 2-7, the casing 18 may, for example, enclose the other components of the system 10 and may include mechanical attachment features to attach the casing 18 to the vehicle 16 and electronic connections to connect to and communicate with electronic systems of the vehicle 16, e.g., components of the ADAS. The casing 18, for example, may be plastic or metal and may protect the other components of the system 10 from environmental precipitation, dust, etc. The system 10 may be a unit. In other words, the light source 28, the photodetector 14, and the system 10 controller 26 may be supported by casing 18.

Specifically, the light emitter 12 is stationary relative to the casing 18. In other words, the light emitter 12 does not move relative to the casing 18 during operation of the system 10. The light emitter 12 may be mounted to the casing 18 in any suitable fashion such that the light emitter 12 and the casing 18 move together as a unit.

The system 10 includes a heat sink 56 on the casing 18 adjacent the light emitter 12. The heat sink 56 may include, for example, a wall 58 adjacent the light emitter 12 and fins 60 extending away from the wall 58 exterior to the casing 18 for dissipating heat away from the light emitter 12. The wall 58 and/or fins 60, for example, may be material with relatively high heat conductivity. The light emitter 12 may, for example, abut the wall 58 to encourage heat transfer. The first light emitter 12 and second light emitter 46 may also include additional cooling methods, e.g. thermal electric coolers TEC.

The stationary mirrors and diffusers are supported by the casing 18. Specifically, the stationary mirrors and diffusers are stationary relative to the casing 18. The stationary mirrors and diffusers may be mounted to the casing 18 in any suitable fashion so as to move with the casing 18 as a unit.

The beam-steering device 20 is supported by the casing 18. In the example in which the beam-steering device 20 includes a micromirror, the micromirror may be movable relative to the casing 18 to direction the reflection of the light emitted from the light emitter 12.

As set forth above, the housing 24 supports the photodetector 14, 44 and is pivotally supported by the casing 18 for pivoting (i.e., tilting, swiveling, etc.) the photodetector 14, 44. Specifically, the housing 24 may be pivotally engaged with the casing 18, i.e., directly in contact with the housing 24, or may be coupled to the housing 24 through an intermediate component. The photodetector 14, 44 is stationary relative to the housing 24, i.e., moves as a unit with the housing 24, such that the housing 24 can be pivoted relative to the casing 18 to adjust the field of view FOV of the photodetector 14, 44.

The housing 24 is pivotable relative to the casing 18 about a horizontal axis A, i.e., can swivel, tilt, etc., about the horizontal axis A. Specifically, horizontal pivot points 62, i.e., pivot points 62 that allow for pivoting about a horizontal axis A, connect the housing 24 to the casing 18. The horizontal pivot points 62 are spaced from each other along a horizontal axis A. The casing 18 and/or the housing 24 may include brackets 64 that support the horizontal pivot points 62. The housing 24 may be horizontally fixed to the casing 18, i.e., does not move relative to the casing 18 about a vertical axis. As another example, the housing may be movable relative to the casing about a vertical axis to horizontally selectively steer the field of illumination FOI, and in such an example, the housing may be moveble through a fixed range of angles, e.g., less than 180°. In other words, system 10 is not a 360 ° scanning system.

The actuator 22 is between the housing 24 and the casing 18 for pivoting the housing 24 relative to the casing 18. For example, the actuator 22 may be fixed to the casing 18 and the housing 24 to move the casing 18 and the housing 24 relative to each other about the horizontal pivot points 62.

The actuator 22 may be, for example, an electric motor. As one example, the motor may include a base 66 fixed to one of the casing 18 and the housing 24 and a plunger 68 fixed to the other of the casing 18 and the housing 24. The motor may be powered to retract the plunger 68 into the base 66 or extend the plunger 68 from the base 66 to move the housing 24 relative to the casing 18. In such an example, the actuator 22 is spaced from the horizontal pivot points 62 such that force exerted between the casing 18 and the housing 24 by the actuator 22 moves the casing 18 and the housing 24 about the horizontal pivot points 62. As another example, the motor may provide a rotary input to the housing 24. For example, the motor may be between the housing 24 and the casing 18 at one or both horizontal pivot points 62 and may exert a rotational force at the pivot point to rotate the housing 24 relative to the casing 18.

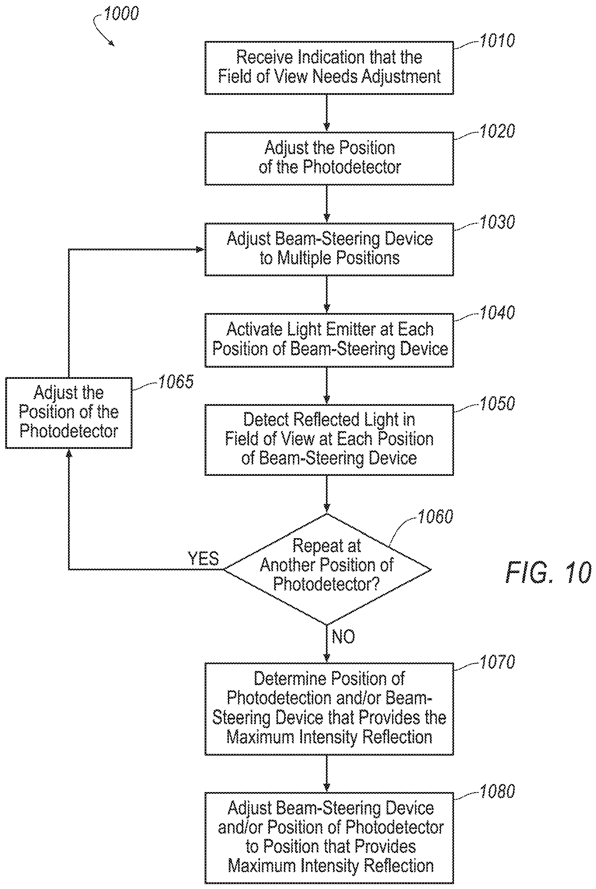

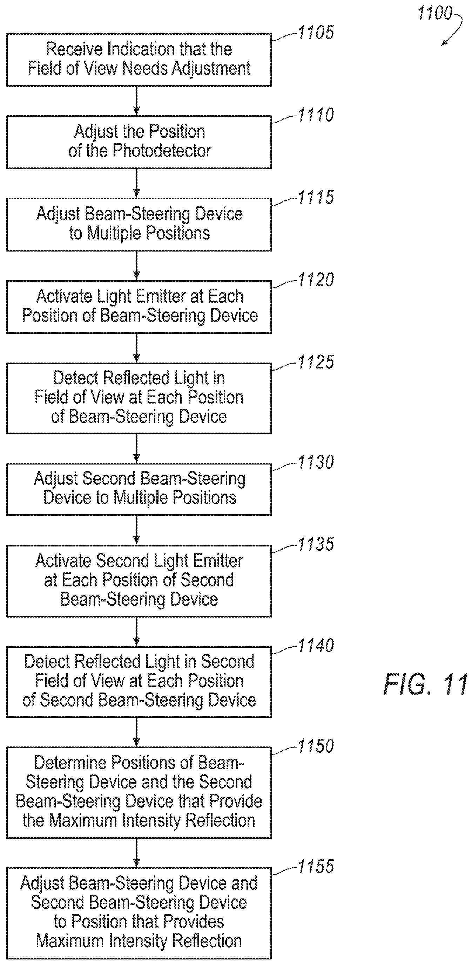

As set forth above, the controller 26 is schematically shown in Figures 8 and 9. The controller 26, i.e., the processor of the controller 26, is programmed to execute instructions stored in memory of the controller 26. Two example methods performed by the controller 26 are in Figures 10 and 11.

The controller 26 is programmed to receive indication that the field of view FOV needs adjustment. It is detected that the field of view FOV is vertically offset from a horizontal position, e.g., horizon, to a degree that the field of view FOV needs to be readjusted. As an example, the field of view FOV may change when the ride-height and/or angle of the vehicle 16 change, as described above. In response to such an indication, the controller 26 adjusts the position of the photodetector 14. The controller 26 pivots the photodetector 14 to vertically position the field of view FOV to a desired position, e.g., to a horizontal position. Specifically, the controller 26 may pivot the housing 24 relative to the casing 18, which adjusts the field of view FOV of the photodetector 14 because the photodetector 14 moves as a unit with the housing 24. For example, the controller 26 may be programmed to power the actuator 22 to pivot the housing 24. In the example in which the actuator 22 is the motor, the actuator 22 may be powered to extend or retract the plunger 68 to move the housing 24 relative to the casing 18.

After adjustment of the field of view FOV, the field of illumination FOI is adjusted to align the field of view FOV and the field of illumination FOI. In other words, the beam-steering device 20 is adjusted in response to adjustment of the field of view FOV to align the field of view FOV and the field of illumination FOI. Specifically, the field of illumination FOI may be adjusted vertically and/or horizontally to align the field of view FOV and the field of illumination FOI.

Specifically, the controller 26 is programmed to activate the light emitter 12, i.e., to instruct the light emitter 12 to emit light. Similarly, with reference to the example in Figure 9, the controller 26 is programmed to activate the second light emitter 46. The controller 26 may activate the light emitter 12 and the second light emitter 46 independently or dependently and may activate the light emitter 12 and the second light emitter 46 simultaneously or at different times.

The controller 26 is programmed to receive data from the photodetector 14 indicating detection of light from the light emitter 12 that was reflected by an object in a field of view FOV of the photodetector 14. Similarly, in the example shown in Figure 9, the controller 26 is also programmed to receive data from the second photodetector 44 indicating detection of light from the second light emitter 46 that was reflected by an object in the field of view FOV of the second photodetector 44, i.e., the second field of view.

After the position of the photodetector 14 has been set for the new vehicle position (e.g., in block 1020 in Fig. 10 as described below), the controller 26 is programmed to adjust the beam-steering device 20 and/or the position of the photodetector 14 to align the field of illumination FOI with the field of view FOV, i.e., adjusting the vertical positions of the field of view FOV and/or the vertical and/or horizonal position of the field of illumination FOI to align the field of view FOV and the field of illumination FOI. As one example, the controller 26 may set the position of the field of view FOV and adjust the field of illumination FOI (vertically adjustment and/or horizontal adjustment) to align the two. In addition to adjusting the beam-steering device 20 in such an example, the controller 26 may adjust the position of the photodetector 14, e.g., +/- a predetermined angle from the position setting in block 1020 in Fig. 10, to align the field of view FOV with the field of illumination FOI. This predetermined angle may be based on acceptable deviation from the horizontal position set in block 1020 in Fig. 10.

In the example where the beam-steering device 20 is the micro-electro-mechanical systems mirror, the controller 26 is programmed to adjust the voltage supplied to the micro-electro-mechanical systems mirror to adjust the vertical and/or horizontal position of the field of illumination FOI. Specifically, the change in voltage turns the active mirror 32, e.g., about a gimbal, to adjust the position of the field of illumination FOI.

As set forth above, the alignment of the field of view FOV and the field of illumination FOI may be based on maximum detection of reflected light on an object in the field of view FOV. In other words, the controller 26 is programmed to adjust the beam-steering device 20 (vertically and//or horizontally) and the photodetector 14 to align the field of view FOV and the field of illumination FOI to the position that provides the maximum intensity of light reflected by an object in the field of view FOV.

In such an example, the controller 26 is programmed to identify changes in intensity of light reflected by an object in the field of view FOV as the beam-steering device 20 and/or photodetector 14 are adjusted. As an example, the controller 26 may be programmed to set the position of the field of view FOV and scan through various vertical and/or horizontal positions of the field of illumination FOI to identify the position of the field of view FOV that provides the maximum intensity of detected reflections. In the example in which the position of the photodetector 14 is also adjusted to align the field of view FOV and the field of illumination FOI, the field of view FOV may be set to several other positions and controller 26 scans through the various vertical positions of the field of illumination FOI at each of these positions of the field of view FOV. In addition to scanning through the various vertical positions of the field of illumination FOI, the controller 26 may scan through various horizontal positions of the field of illumination FOI. During the scanning of the various vertical positions of the field of view FOV and the various vertical and/or horizontal positions of the field of illumination FOI, the combination of position of the field of view FOV (i.e., the vertical position) and the position of the field of illumination FOI (the vertical and/or horizontal positions) that provide the maximum illumination of reflections in the field of view FOV may be identified. In other words, the controller 26 is programmed to determine the position of the beam-steering device 20 and the photodetector 14 that provide the maximum intensity of light reflected by an object in the field of view FOV. Once these positions are identified, the processor is programmed to adjust the beam-steering device 20 and the photodetector 14 to these positions, i.e., to center the field of illumination FOI on the field of view FOV based on the changes in intensity.

A method 1000 of operating the examples shown in Figures 2-5 is shown in Figure 10. The controller 26 may be programmed to perform the method shown in Figure 10.

In block 1010, the method includes receiving an indication that the field of view FOV needs vertical adjustment. As set forth above, the field of view FOV needs to be adjusted when the field of view FOV is vertically offset from a horizontal position, e.g., the horizon, to a degree that the field of view FOV needs to be readjusted. The detection that the field of view FOV needs vertical adjustment may be made by the system 10 itself and/or by other components of the vehicle 16, e.g., components that monitor ride characteristics of the vehicle 16.

In block 1020, the method includes, in response the indication that the field of view FOV needs vertical adjustment, adjusting the position of the photodetector 14. Block 1020 includes pivoting the housing 24 relative to the casing 18, which adjusts the field of view FOV of the photodetector 14 because the photodetector 14 moves as a unit with the housing 24. Specifically, the method includes powering the motor to extend or retract the plunger 68 to move the housing 24 relative to the casing 18. The system 10 itself may determine the desired position to be set in block 1020 and/or the desired position may be based on data and/or instruction from other components of the vehicle 16.

The method includes activating a light emitter 12, receiving data from the photodetector 14 indicating detection of light from the light emitter 12 that was reflected by an object in a field of view FOV, and adjusting the beam-steering device 20 to ( vertically and/or horizontally) align the field of view FOV with the field of illumination FOI. Specifically, in blocks 1030, 1040, and 1050, the method includes setting the position of the field of view FOV and scanning through various positions of the field of illumination FOI. This data is used to identify the position of the field of view FOV that provides the maximum intensity of detected reflections.

In decision block 1060, the method includes determining whether the scan in blocks 1030, 1040, and 1050 is to be repeated for another position of the photodetector 14. As set forth above, the photodetector 14 may be adjusted within a predetermined acceptable deviation from the position set in block 1020. In such an example, the method may repeat blocks 1030, 1040, and 1050 for a predetermined number of sample angles, i.e., if the answer is yes in block 1060. In other words, the method may include scanning several positions of the photodetector 14 at several positions of the beam-steering device 20. If blocks 1030, 1040, and 1050 are to be repeated, block 1065 includes adjusting the position of the photodetector 14 before block 1030 is performed again.

If the answer is no in decision block 1060, the method includes determining the position of the beam-steering device 20 and/or the photodetector 14 that provide the maximum intensity reflection. In block 1080, the method includes adjusting the beam-steering device 20 (i.e., vertically and/or horizontally) and/or the position of the photodetector 14 (i.e., vertically) to the position that provides the maximum intensity reflection.

A method 1100 of operating the example shown in Figures 6-7 is shown in Figure 11. The controller 26 may be programmed to perform the method shown in Figure 11. Similar to blocks 1010 and 1020 in Figure 10 and described above, the block 1105 includes receiving an indication that the field of view FOV needs adjustment and block 1110 includes adjusting the position of the photodetector 14 to a desired position in response the indication that the field of view FOV needs vertical adjustment.

Similar to blocks 1030, 1040, and 1050 in Figure 10, blocks 1115, 1120, and 1125 include setting the position of the field of view FOV (i.e., the vertical position) and scanning through various positions of the field of illumination FOI (i.e., vertical position and/or horizontal position). This data is used to identify the position of the field of view FOV that provides the maximum intensity of detected reflections. Similarly, blocks 1130, 1135, and 1140 perform the same steps for the second field of view and second field of illumination. In other words, the method 1100 includes setting the position of the second photodetector 44 and scanning through various positions of the second beam-steering device 48 (i.e., vertical and/or horizontal positions).

In block 1150, the method includes determining the positions (vertical and/or horizontal) of the beam-steering device 20 and the second beam-steering device 48 that provide the maximum intensity reflection, respectively. In block 1060, the method includes adjusting the beam-steering device 20 and the second beam-steering device 48 to the respective positions that provide the maximum intensity reflections.

## Claims

1. A system (10) comprising:
a casing (18);
a light emitter (12) stationary relative to the casing (18);
a beam-steering device (20) configured to adjustably reflect light from the light emitter (12) into a field of illumination (FOI);
a photodetector (14) pivotally supported by the casing (18) and having a field of view (FOV) overlapping the field of illumination (FOI);
an actuator (22) between the casing (18) and the photodetector (14) and configured to pivot the photodetector (14) relative to the casing (18);
a controller (26) programmed to:
receive an indication that the field of view (FOV) needs adjustment when the field of view (FOV) is vertically offset from a horizontal position,
adjust the position of the photodetector (14) to vertically position the field of (FOV) to a desired position,
adjust the field of illumination (FOI) to align the field of illumination (FOI) with the field of view (FOV).

2. The system (10) as set forth in claim 1, further comprising a heat sink (56) on the casing (18) adjacent the light emitter (12).

3. The system (10) as set forth in claim 1, further comprising a housing (24) supporting the photodetector (14) and pivotally supported by the casing (18), the actuator (22) being between the housing (24) and the casing (18).

4. The system (10) as set forth in claim 3, wherein the housing (24) is pivotable relative to the casing (18) about a horizontal axis (A).

5. The system (10) as set forth in claim 1, further comprising:
a second light emitter (46) stationary relative to the casing (18); and
a second beam steering device (48) configured to adjustably reflect light from the second light emitter (46) into a second field of illumination;
a second photodetector (44) pivotally supported by the housing (24) and having a second field of view overlapping the second field of illumination.

6. The system (10) as set forth in claim 5, further comprising a housing (24) supporting the photodetector (14) and the second photodetector (44) and pivotally engaged with the casing (18), the actuator being between the housing (24) and the casing (18).

7. The system (10) as set forth in claim 6, wherein the beam-steering device (20) is a micro-electro-mechanical systems mirror (32) and the controller (26) is programmed to adjust the micro-electro-mechanical systems mirror (32) to align the field of illumination (FOI) with the field of view (FOV).

8. The system (10) as set forth in claim 1, wherein the beam-steering device (20) is a micro-electro-mechanical systems mirror (32), and further comprising a controller (26) programmed to vertically adjust the micro-electro-mechanical systems mirror to align the field of illumination (FOI) with the field of view (FOV).

9. The system (10) as set forth in claim 1, wherein the beam-steering device is a micro-electro-mechanical systems mirror (32), and further comprising a controller (26) programmed to horizontally adjust the micro-electro-mechanical systems mirror (32) to align the field of illumination (FOI) with the field of view (FOV).

10. A method (1000) comprising:
receiving (1010), by a controller (26), an indication that a field of view (FOV) of a photodetector (14) needs vertical adjustment, wherein the photodetector is pivotally supported in a casing (18);
adjusting (1020), by the controller (26), a position of the photodetector (14) in response to the indication that the field of view needs vertical adjustment;
activating (1040) a light emitter (12) stationary relative in the casing (18);
receiving (1050) data from the photodetector (14) indicating detection of light from the light emitter that was reflected by an object in the field of view; and
adjusting (1065), by the controller (26), a beam-steering device (20) that reflects light from the light emitter into a field of illumination (FOI) that overlaps the field of view (FOV) to align the field of illumination (FOI) with the field of view (FOV).

11. The method (1000) as set forth in claim 10, further comprising identifying changes in intensity of reflections in the field of view as the beam-steering device and/or the photodetector are adjusted.

12. The method (1000) as set forth in claim 10, further comprising determining the position of the beam-steering device and the photodetector that provide the maximum intensity of light reflected by an object in the field of view.

13. The method (1000) as set forth in claim 12, further comprising vertically adjusting the beam-steering device and/or the photodetector to align the field of view with the field of illumination to a position that provides the maximum intensity of light reflected by an object in the field of view.

14. The method (1000) as set forth in claim 12, further comprising horizontally adjusting the beam-steering device to align the field of illumination with the field of view to the position that provides the maximum intensity of light reflected by an object in the field of view.

## Patentansprüche

1. System (10), Folgendes aufweisend:
eine Hülle (18);
einen Lichtemitter (12), der relativ zur Hülle (18) stationär ist;
eine Strahllenkungsvorrichtung (20), die ausgebildet ist zum einstellbaren Reflektieren von Licht aus dem Lichtemitter (12) in ein Beleuchtungsfeld (Field of Illumination, FOI);
einen Fotodetektor (14), der von der Hülle (18) schwenkbar getragen wird und ein Sichtfeld (Field of View, FOV) aufweist, welches das Beleuchtungsfeld (FOI) überlappt;
einen Aktuator (22) zwischen der Hülle (18) und dem Fotodetektor (14), und der ausgebildet ist zum Schwenken des Fotodetektors (14) relativ zur Hülle (18);
eine Steuereinheit (26), die ausgebildet ist zum:
Empfangen einer Angabe, dass das Sichtfeld (FOV) eingestellt werden muss, wenn das Sichtfeld (FOV) von einer horizontalen Position vertikal versetzt ist,
Einstellen der Position des Fotodetektors (14), um das Sichtfeld (FOV) vertikal auf einer gewünschten Position anzuordnen,
Einstellen des Beleuchtungsfelds (FOI), um das Beleuchtungsfeld (FOI) mit dem Sichtfeld (FOV) auszurichten.

2. System (10) nach Anspruch 1, weiterhin einen Kühlkörper (56) auf der Hülle (18) benachbart zum Lichtemitter (12) aufweisend.

3. System (10) nach Anspruch 1, weiterhin ein Gehäuse (24) aufweisend, das den Fotodetektor (14) trägt und durch die Hülle (18) schwenkbar getragen wird, wobei der Aktuator (22) zwischen dem Gehäuse (24) und der Hülle (18) ist.

4. System (10) nach Anspruch 3, wobei das Gehäuse (24) relativ zur Hülle (18) um eine horizontale Achse (A) schwenkbar ist.

5. System (10) nach Anspruch 1, weiterhin Folgendes ausweisend:
einen zweiten Lichtemitter (46), der relativ zur Hülle (18) stationär ist; und
eine zweite Strahllenkungsvorrichtung (48), die ausgebildet ist zum einstellbaren Reflektieren von Licht aus dem zweiten Lichtemitter (46) in ein zweites Beleuchtungsfeld;
einen zweiten Fotodetektor (44), der durch das Gehäuse (24) schwenkbar getragen wird und ein zweites Sichtfeld aufweist, welches das zweite Beleuchtungsfeld überlappt.

6. System (10) nach Anspruch 5, weiterhin ein Gehäuse (24) aufweisend, das den Fotodetektor (14) und den zweiten Fotodetektor (44) trägt und schwenkbar mit der Hülle (18) in Eingriff steht, wobei der Aktuator zwischen dem Gehäuse (24) und der Hülle (18) ist.

7. System (10) nach Anspruch 6, wobei die Strahllenkungsvorrichtung (20) ein Spiegel eines mikroelektromechanischen Systems (32) ist und die Steuereinheit (26) programmiert ist, um den Spiegel eines mikroelektromechanischen Systems (32) einzustellen, um das Beleuchtungsfeld (FOI) mit dem Sichtfeld (FOV) auszurichten.

8. System (10) nach Anspruch 1, wobei die Strahllenkungsvorrichtung (20) ein Spiegel eines mikroelektromechanischen Systems (32) ist, und weiterhin eine Steuereinheit (26) aufweisend, die programmiert ist, um den Spiegel eines mikroelektromechanischen Systems vertikal einzustellen, um das Beleuchtungsfeld (FOI) mit dem Sichtfeld (FOV) auszurichten.

9. System (10) nach Anspruch 1, wobei die Strahllenkungsvorrichtung ein Spiegel eines mikroelektromechanischen Systems (32) ist, und weiterhin eine Steuereinheit (26) aufweisend, die programmiert ist, um den Spiegel eines mikroelektromechanischen Systems (32) horizontal einzustellen, um das Beleuchtungsfeld (FOI) mit dem Sichtfeld (FOV) auszurichten.

10. Verfahren (1000), Folgendes aufweisend:
Empfangen (1010), durch eine Steuereinheit (26), einer Angabe, dass ein Sichtfeld (FOV) eines Fotodetektors (14) vertikal eingestellt werden muss, wobei der Fotodetektor in einer Hülle (18) schwenkbar getragen wird;
Einstellen (1020), durch die Steuereinheit (26), einer Position des Fotodetektors (14) als Reaktion auf die Angabe, dass das Sichtfeld vertikal eingestellt werden muss;
Aktivieren (1040) eines Lichtemitters (12), der relativ zur Hülle (18) stationär ist;
Empfangen (1050) von Daten von dem Fotodetektor (14), die eine Detektion von Licht aus dem Lichtemitter angeben, das von einem Objekt im Sichtfeld reflektiert wurde; und
Einstellen (1065), durch die Steuereinheit (26), einer Strahllenkungsvorrichtung (20), die Licht aus dem Lichtemitter in ein Beleuchtungsfeld (FOI) reflektiert, welches das Sichtfeld (FOV) überlappt, um das Beleuchtungsfeld (FOI) mit dem Sichtfeld (FOV) auszurichten.

11. Verfahren (1000) nach Anspruch 10, weiterhin Identifizieren von Änderungen der Intensität von Reflexionen in dem Sichtfeld aufweisend, wenn die Strahllenkungsvorrichtung und/oder der Fotodetektor eingestellt sind.

12. Verfahren (1000) nach Anspruch 10, weiterhin Bestimmen der Position der Strahllenkungsvorrichtung und des Fotodetektors aufweisend, welche die maximale Intensität von Licht bereitstellen, das von einem Objekt im Sichtfeld reflektiert wird.

13. Verfahren (1000) nach Anspruch 12, weiterhin vertikales Einstellen der Strahllenkungsvorrichtung und/oder des Fotodetektors aufweisend, um das Sichtfeld mit dem Beleuchtungsfeld auf eine Position auszurichten, welche die maximale Intensität von Licht bereitstellt, das von einem Objekt im Sichtfeld reflektiert wird.

14. Verfahren (1000) nach Anspruch 12, weiterhin horizontales Einstellen der Strahllenkungsvorrichtung aufweisend, um das Beleuchtungsfeld mit dem Sichtfeld auf die Position auszurichten, welche die maximale Intensität von Licht bereitstellt, das von einem Objekt im Sichtfeld reflektiert wird.

## Revendications

1. Système (10) comprenant :
un boîtier (18) ;
un émetteur de lumière (12) stationnaire par rapport au boîtier (18) ;
un dispositif d'orientation de faisceau (20) conçu pour réfléchir de façon réglable la lumière provenant de l'émetteur de lumière (12) à l'intérieur d'un champ d'éclairage (FOI) ;
un photodétecteur (14) supporté avec faculté de pivotement par le boîtier (18) et ayant un champ de vision (FOV) chevauchant le champ d'éclairage (FOI) ;
un actionneur (22) entre le boîtier (18) et le photodétecteur (14) et conçu pour faire pivoter le photodétecteur (14) par rapport au boîtier (18) ;
un contrôleur (26) programmé pour :
recevoir une indication que le champ de vision (FOV) nécessite un réglage quand le champ de vision (FOV) est décalé verticalement par rapport à une position horizontale,
régler la position du photodétecteur (14) pour positionner verticalement le champ de vision (FOV) dans une position souhaitée,
régler le champ d'éclairage (FOI) pour aligner le champ d'éclairage (FOI) avec le champ de vision (FOV).

2. Système (10) selon la revendication 1, comprenant en outre un dissipateur thermique (56) sur le boîtier (18) au voisinage de l'émetteur de lumière (12).

3. Système (10) selon la revendication 1, comprenant en outre un caisson (24) supportant le photodétecteur (14) et supporté avec faculté de pivotement par le boîtier (18), l'actionneur (22) se situant entre le caisson (24) et le boîtier (18).

4. Système (10) selon la revendication 3, dans lequel le caisson (24) peut pivoter par rapport au boîtier (18) autour d'un axe horizontal (A).

5. Système (10) selon la revendication 1, comprenant en outre :
un deuxième émetteur de lumière (46) stationnaire par rapport au boîtier (18) ; et
un deuxième dispositif d'orientation de faisceau (48) conçu pour réfléchir de façon réglable la lumière provenant du deuxième émetteur de lumière (46) à l'intérieur d'un deuxième champ d'éclairage ;
un deuxième photodétecteur (44) supporté avec faculté de pivotement par le caisson (24) et ayant un deuxième champ de vision chevauchant le deuxième champ d'éclairage.

6. Système (10) selon la revendication 5, comprenant en outre un caisson (24) supportant le photodétecteur (14) et le deuxième photodétecteur (44) et en prise pivotante avec le boîtier (18), l'actionneur se situant entre le caisson (24) et le boîtier (18).

7. Système (10) selon la revendication 6, dans lequel le dispositif d'orientation de faisceau (20) est un miroir (32) à systèmes microélectromécaniques et le contrôleur (26) est programmé pour régler le miroir (32) à systèmes microélectromécaniques pour aligner le champ d'éclairage (FOI) avec le champ de vision (FOV).

8. Système (10) selon la revendication 1, dans lequel le dispositif d'orientation de faisceau (20) est un miroir (32) à systèmes microélectromécaniques, et comprenant en outre un contrôleur (26) programmé pour régler verticalement le miroir à systèmes microélectromécaniques pour aligner le champ d'éclairage (FOI) avec le champ de vision (FOV).

9. Système (10) selon la revendication 1, dans lequel le dispositif d'orientation de faisceau est un miroir (32) à systèmes microélectromécaniques, et comprenant en outre un contrôleur (26) programmé pour régler horizontalement le miroir (32) à systèmes microélectromécaniques pour aligner le champ d'éclairage (FOI) avec le champ de vision (FOV).

10. Procédé (1000) comprenant :
la réception (1010), par un contrôleur (26), d'une indication qu'un champ de vision (FOV) d'un photodétecteur (14) nécessite un réglage vertical, le photodétecteur étant supporté avec faculté de pivotement dans un boîtier (18) ;
le réglage (1020), par le contrôleur (26), d'une position du photodétecteur (14) en réponse à l'indication que le champ de vision nécessite un réglage vertical ;
l'activation (1040) d'un émetteur de lumière (12) stationnaire par rapport au boîtier (18) ;
la réception (1050), en provenance du photodétecteur (14), de données indiquant la détection de lumière provenant de l'émetteur de lumière qui a été réfléchie par un objet dans le champ de vision ; et
le réglage (1065), par le contrôleur (26), d'un dispositif d'orientation de faisceau (20) qui réfléchit la lumière provenant de l'émetteur de lumière à l'intérieur d'un champ d'éclairage (FOI) qui chevauche le champ de vision (FOV) pour aligner le champ d'éclairage (FOI) avec le champ de vision (FOV).

11. Procédé (1000) selon la revendication 10, comprenant en outre l'identification de changements dans l'intensité de réflexions dans le champ de vision lorsque le dispositif d'orientation de faisceau et/ou le photodétecteur sont réglés.

12. Procédé (1000) selon la revendication 10, comprenant en outre la détermination des positions du dispositif d'orientation de faisceau et du photodétecteur qui fournissent l'intensité maximale de lumière réfléchie par un objet dans le champ de vision.

13. Procédé (1000) selon la revendication 12, comprenant en outre le réglage vertical du dispositif d'orientation de faisceau et/ou du photodétecteur pour aligner le champ de vision avec le champ d'éclairage dans une position qui fournit l'intensité maximale de lumière réfléchie par un objet dans le champ de vision.

14. Procédé (1000) selon la revendication 12, comprenant en outre le réglage horizontal du dispositif d'orientation de faisceau pour aligner le champ d'éclairage avec le champ de vision dans la position qui fournit l'intensité maximale de lumière réfléchie par un objet dans le champ de vision.
